# FASCICULE DE BREVET EUROPEEN

(11) **EP 0 914 759 B1**
(45) Date de publication et mention de la délivrance du brevet: **21.04.2004**
(21) Numéro de dépôt: 98440248.7
(22) Date de dépôt: 02.11.1998
(51) Int. Cl.: A01B 33/14

(54) **Système de fixation pour outils d'une machine agricole**
Befestigungssystem für Werkzeuge einer landwirtschaftlichen Maschine
Blade mounting assembly for agricultural machine

(30) Priorité: 04.11.1997 FR 9714003
(43) Date de publication de la demande: 12.05.1999
(73) Titulaire: KUHN S.A., 67706 Saverne Cedex (FR)
(72) Inventeur: Kirch, Michel, 67260 Keskastel (FR); Oberle, Edmond, 67700 Saverne (FR)

(56) Documents cités:
- EP-A- 0 501 349
- WO-A-98/51141
- DE-U- 29 514 041
- FR-A- 2 330 295
- FR-A- 2 531 600
- US-A- 3 101 122
- US-A- 3 949 813

## Description

La présente invention se rapporte au domaine technique général des machines agricoles de travail du sol et notamment des herses rotatives ou fraises. Ce domaine technique englobe plus généralement tout type d'appareil comportant des éléments d'usure susceptibles d'être remplacés plus ou moins régulièrement.

L'invention concerne plus particulièrement une fixation d'outils de travail sur une machine de travail du sol. Une telle fixation devrait être de préférence rapide, facile à mettre en oeuvre et efficace du point de vue de la tenue dans le temps. Le remplacement des outils de travail ne devrait pas en outre imposer un travail dur ou pénible à l'utilisateur de la machine agricole conforme à l'invention.

Il est déjà connu de réaliser une machine agricole comportant :
- un carter supportant au moins un rotor porte-outils pourvu de trous et tournant autour d'un axe de rotation (x-x'),
- des outils présentant chacun une partie de fixation et une partie de travail, ladite partie de fixation s'étendant selon un axe radial perpendiculaire à l'axe de rotation et correspondant à une direction de montage sur le rotor porte-outil,
et
- des organes de fixation comprenant d'une part une pièce de fixation pourvue d'au moins un taraudage et d'autre part au moins une vis destinée à être engagée parallèlement à l'axe de rotation (x-x') dans l'un des trous et dans un taraudage correspondant, de manière à solidariser la partie de fixation sur le rotor porte-outils.

On connaît ainsi par l'intermédiaire d'une publication (Landpost 21/97) une fixation pour un outil de travail d'une herse rotative. Cette fixation comprend une pièce de fixation du type flasque présentant deux taraudages ainsi que deux perçages ménagés dans le rotor porte-outils. Un outil de travail, et plus particulièrement sa partie de fixation, également pourvue de deux perçages, est rapportée sur le rotor porte-outils en alignant perçages et taraudages. Ces derniers sont ensuite traversés par une vis dont le serrage permet de solidariser l'outil de travail avec le rotor porte-outils.

Un tel système de fixation présente l'inconvénient qu'il nécessite un dévissage complet des vis de fixation pour remplacer les outils de travail. De telles opérations sont souvent coûteuses en temps car l'accessibilité aux parties de fixation des outils de travail et plus particulièrement aux têtes de vis est réduite. L'utilisation et la mise en place d'une clé pour serrer et desserrer les vis sont ainsi rendues plus difficiles et pénibles, d'autant plus qu'un vissage ou dévissage complet est nécessaire. Le remplacement d'un grand nombre d'outils de travail n'est pas, par conséquent, une opération facile et rapide.

L'objet de la présente invention vise à s'affranchir de ces inconvénients et à simplifier l'assemblage entre des outils de travail du sol et leurs supports correspondants d'une machine agricole.

Un autre objet de la présente invention vise à réaliser une fixation stable et durable dans le temps.

Un objet supplémentaire de la présente invention vise à réaliser des moyens aptes à définir pour des outils une position de montage optimale sur un rotor porte-outils d'une machine agricole.

Les objets de la présente invention sont atteints à l'aide d'une machine agricole caractérisée en ce que la partie de fixation présente une zone d'épaisseur localement modifiée, associée à une forme correspondante complémentaire de l'un des organes de fixation ou du rotor porte-outils, ladite forme complémentaire venant s'engager dans ou sur ladite zone lors du serrage de la (des) vis, ledit engagement réalisant l'unique retenue radiale de la partie de fixation de manière à autoriser un démontage complet de l'outil suivant la direction radiale avec un desserrage partiel de la (des) vis.

Les objets de la présente invention sont également atteints à l'aide d'un outil pour machine agricole comportant une partie de fixation et une partie active de travail, caractérisé en ce que la partie de fixation présente une zone d'épaisseur localement modifiée, destinée à coopérer avec une forme complémentaire prévue sur l'un au moins des organes de fixation de l'outil ou sur un rotor porte-outils de ladite machine, la zone s'étendant de manière à maintenir l'outil suivant une direction radiale de montage par rapport à un axe de rotation.

Un avantage non négligeable est obtenu par un remplacement rapide des outils de travail montés sur une machine agricole conforme à l'invention.

Cette dernière présente également l'avantage de supprimer le jeu mécanique entre les outils de travail et leur support correspondant.

Un avantage complémentaire d'une machine conforme à l'invention est obtenu par le fait que les outils de travail, susceptibles d'être montés sur une telle machine, présentent une forme et une fabrication simples, réduisant par la même occasion les coûts de fabrication. Ces derniers dans l'exemple d'application se rapportant à une herse rotative, sont également maintenus à un niveau bas grâce à une forme simple des rotors porte-outils.

D'autres caractéristiques et avantages ressortiront également à la lecture de la description détaillée donnée ci-après, en référence aux dessins annexés, donnés à titre d'exemples non limitatifs, dans lesquels :
- la figure 1 représente un exemple de montage, partiellement en coupe, d'outils de travail sur un rotor porte-outils d'une machine agricole conforme à l'invention,
- la figure 2 représente un agrandissement, en coupe, d'un détail de la figure 1,
- la figure 3 représente une vue de dessus selon la direction F de la figure 1 d'un rotor porte-outils sur lequel sont rapportés des outils de travail, conformément à l'invention,
- la figure 4 représente une vue partielle selon la direction G de la figure 1,
- la figure 5 représente un exemple de réalisation d'un outil de travail susceptible d'être monté sur une machine agricole conforme à l'invention,
- la figure 6 représente un autre exemple de montage partiellement en coupe, d'un outil de travail sur un rotor porte-outils d'une machine agricole conforme à l'invention.

Dans la suite de la description, il sera fait allusion à divers modes de réalisation de la machine conforme à l'invention. Ces modes de réalisation se rapportent souvent à une (des) pièces ou à un (des) élément(s) isolé(s), les autres parties de la machine restant identiques d'un mode de réalisation à l'autre. Ainsi lorsque l'on passe d'un mode de réalisation à un autre, ledit (lesdits) élément(s) ou ladite (lesdites) pièce(s) de la machine conforme à l'invention porte(nt) la même dénomination et est (sont) affecté(s) d'une référence augmentée ou diminuée d'un chiffre multiple de 100. Les parties identiques dans les différents modes de réalisation conservent quant à elles les mêmes références.

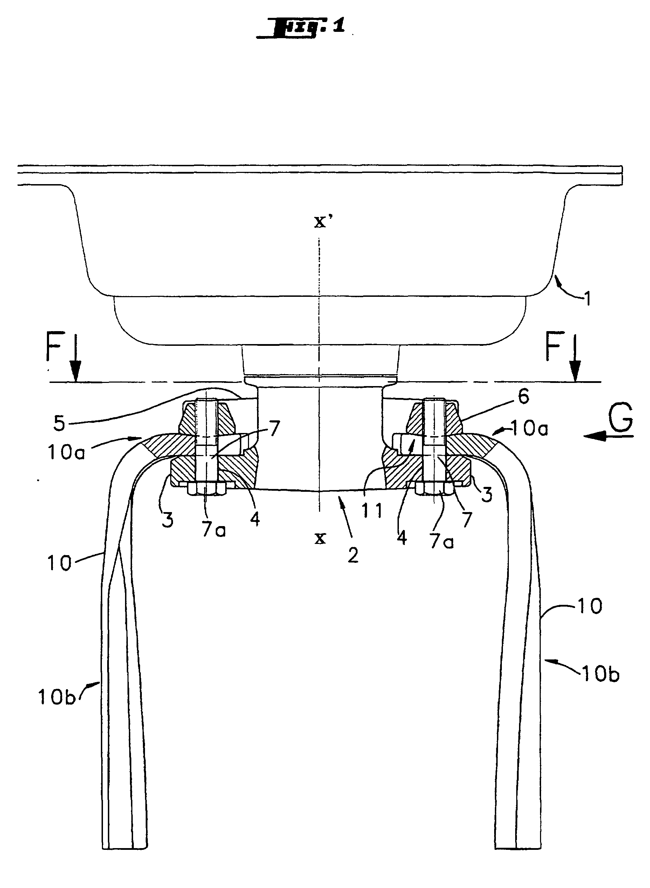

La figure 1 représente à titre d'exemple une partie d'une machine agricole conforme à l'invention, à savoir une herse rotative. Cette dernière est pourvue d'un carter (1) supportant au moins un rotor porte-outils (2). Des moyens d'entraînement, non représentés et connus en soi, sont agencés dans le carter (1) de manière à entraîner en rotation le rotor porte-outils (2). Ce dernier est avantageusement centré sur un axe de rotation (x-x') sensiblement vertical durant le travail, et comporte au moins deux parties planes (3) situées d'une part symétriquement par rapport à l'axe (x-x') et d'autre part sur la périphérie dudit rotor porte-outils (2). Ces parties planes (3) s'étendent horizontalement et sont facilement accessibles. Le rotor porte-outils (2) présente également des trous (4) ménagés de préférence dans les parties planes (3). Les trous (4) sont par exemple obtenus par moulage ou par perçage.

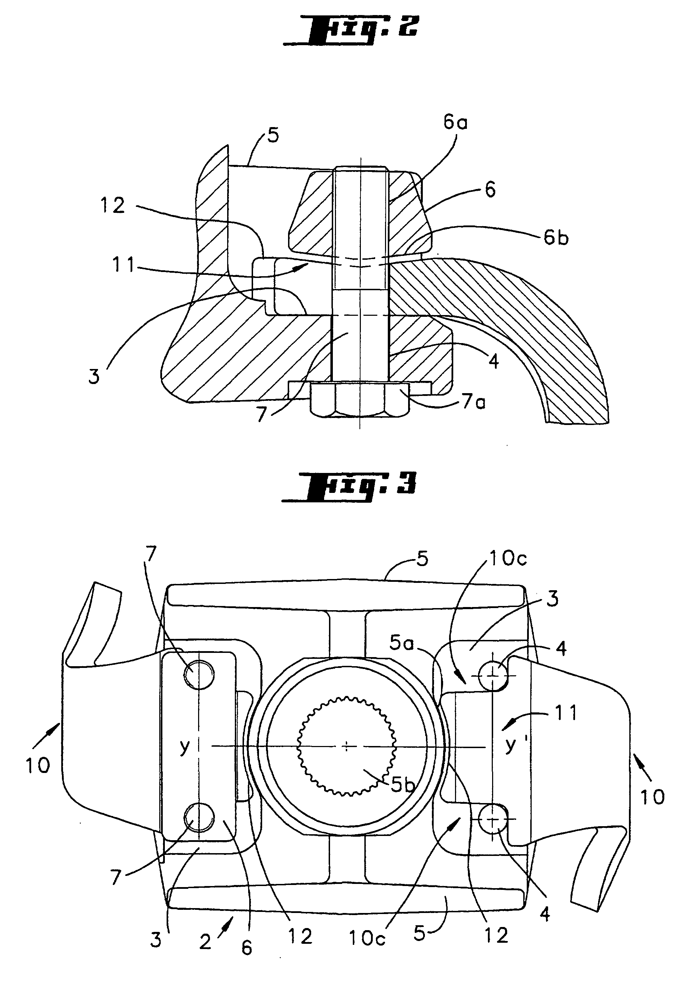

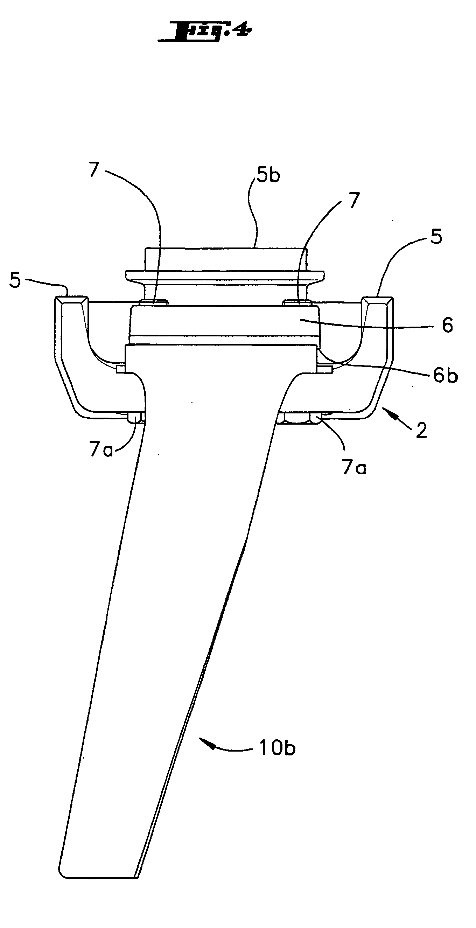

La machine agricole conforme à l'invention comprend par ailleurs des organes de fixation pour solidariser des outils (10) de travail sur le rotor porte-outils (2). Ce dernier comporte, comme cela est visible sur les figures 1, 2 et 3, des parois de protection (5), s'étendant au moins localement à la périphérie dudit rotor porte-outils (2). Les figures 1 et 2 sont des vues en coupe partielle, ne montrant qu'une paroi de protection (5) en arrière-plan. Il est manifeste qu'un rotor porte-outils (2) d'une machine conforme à l'invention comporte avantageusement deux parois de protection (5) situées de part et d'autre des parties planes (3), protégeant ainsi les organes de fixation (figure 3).

Ces derniers comprennent une pièce de fixation (6) et des vis (7). Chacune des vis (7) est engagée dans le trou (4) ainsi que dans un taraudage (6a) correspondant de la pièce de fixation (6).

Le serrage des vis (7) permet ainsi de fixer et de bloquer les outils (10) sur le rotor porte-outils (2) et de préférence entre la partie plane (3) et la pièce de fixation (6).

Chaque outil (10) de travail présente de préférence une forme coudée distinguant une partie de fixation (10a) et une partie active (10b) de travail. La partie de fixation (10a) s'étend selon un axe radial (y-y') (figure 3), perpendiculaire à l'axe de rotation (x-x') du rotor porte-outils (2). Chaque outil (10) est donc monté sur le rotor porte-outils (2) suivant une direction radiale schématisée par l'axe (y-y').

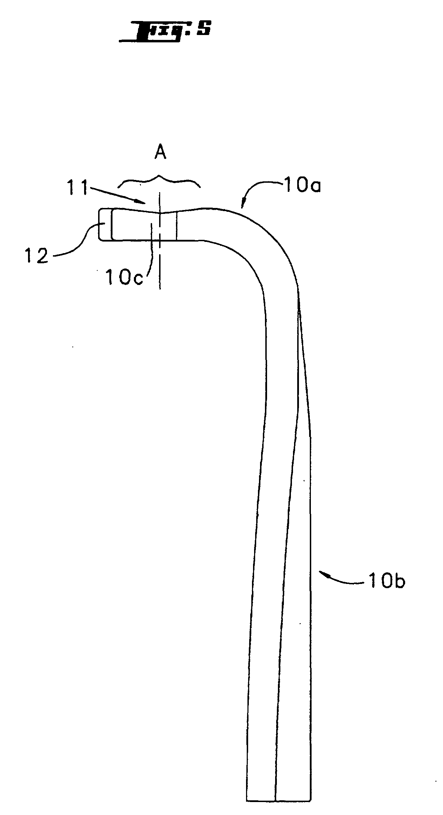

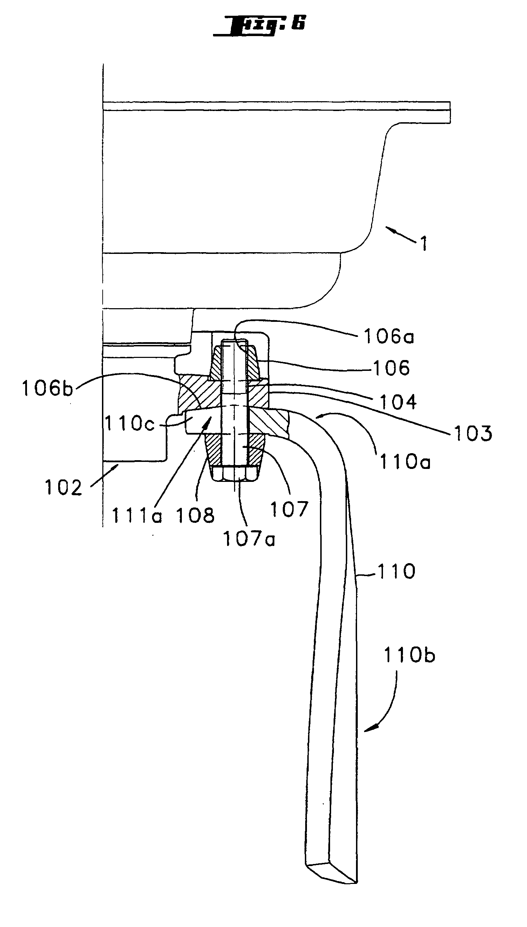

Conformément à l'invention la partie de fixation (10a) présente une zone (A) (figure 5) d'épaisseur localement réduite, associée à une forme complémentaire (6b) de la pièce de fixation (6), ladite forme complémentaire (6b) venant s'engager dans la zone (A) lors du serrage de la (des) vis (7).

La figure 5 montre une vue agrandie d'un outil (10) susceptible d'être monté sur un rotor porte-outils (2). La zone (A) d'épaisseur localement réduite se présente sous forme d'un rétrécissement (11). Ce dernier est centré notamment avec la forme complémentaire (6b) de la pièce de fixation (6), comme cela est représenté aux figures 1 et 2 notamment.

La zone (A) et notamment le rétrécissement (11) présentent avantageusement une forme en "V".

D'autres formes, du type concave peuvent également convenir pour la zone (A). Cette dernière s'étend par exemple perpendiculairement à l'axe radial (y-y').

La figure 2 représente le montage de l'outil (10) sur la partie plane (3), juste avant le serrage de la vis (7) et schématise le centrage du rétrécissement (11), de la forme complémentaire (6b) et de ladite vis (7).

La figure 3 représente une vue selon la direction F-F de la figure 1, à savoir une vue de dessus. La demi-vue de gauche montre l'outil (10) monté sur le rotor porte-outils (2) à l'aide de la pièce de fixation (6) et des vis (7), alors que la demi-vue de droite ne montre que la partie de fixation (10a) positionnée sur la partie plane 3, entre deux trous (4).

La partie de fixation (10a) présente avantageusement une extrémité (12) épousant sensiblement une partie arrondie (5a) du rotor porte-outils (2). La partie arrondie (5a) est utilisée par exemple pour le montage du rotor porte-outils (2) sur un arbre d'entraînement (5b). Un montage en tant que tel est connu et est obtenu à l'aide de tous moyens techniques connus.

La figure 4 représente une vue partielle de la machine agricole conforme à l'invention, prise selon la direction G de la figure 1. La forme complémentaire (6b) est engagée dans le rétrécissement (11), permettant ainsi de positionner et de bloquer de façon optimale l'outil (10) sur le rotor porte-outils (2).

Selon un exemple de montage et de réalisation donné, représenté aux figures 1 à 4, la partie de fixation (10a) vient au moins partiellement en surplomb du rotor porte-outils (2) et plus particulièrement de la partie plane (3) correspondante.

L'outil (10) et plus précisément la partie de fixation (10a) est donc enserrée entre la pièce de fixation (6) et un support réalisé pour le rotor porte-outils (2) correspondant.

La fixation de chaque outil (10) sur le rotor porte-outils (2) est de préférence effectuée à l'aide de deux vis (7). Ces dernières s'étendent par exemple de part et d'autre de la partie de fixation (10a), dans un plan d'extension sensiblement perpendiculaire au plan d'extension de ladite partie de fixation (10a).

Un autre exemple d'un tel mode de fixation est représenté avec la figure 3, sur laquelle on aperçoit une partie de fixation (10a) de largeur réduite. Cette réduction de largeur est obtenue par deux dégagements (10c) alignés sur les trous (4), de manière à autoriser le passage des vis (7) dans lesdits dégagements (10c).

Selon un autre mode de réalisation des outils (10), conforme à l'invention et non représenté aux figures, les dégagements (10c), peuvent être remplacés par des fentes ouvertes sur l'extrémité (12) de la partie de fixation (10a), lorsque cette dernière présente une largeur dépassant l'écartement des deux trous (4). Chaque fente (12) débouchant sur l'extrémité libre de la partie de fixation (10a) est alors traversée par une vis (7), et se présente sous forme de trou oblong.

Selon un mode additionnel de réalisation de la machine agricole conforme à l'invention, représenté par exemple à la figure 6, le rotor porte-outils (102) et plus particulièrement la partie plane (103) vient en surplomb de la partie de fixation (110a).

Il est également possible, à titre d'exemple conforme à l'invention, de réaliser la zone (A) sous forme d'élargissement (111a) du type expansion de matière. Un tel exemple est montré à la figure 6, où l'élargissement (111a) de la partie de fixation (110a) et la forme complémentaire (106b), en l'occurrence un rétrécissement, schématisent un "V" renversé.

Ceci revient à monter la partie de fixation (110a) sous la partie plane (103). Cette dernière est alors pourvue de la forme complémentaire (106b) coopérant avec l'élargissement de la partie de fixation (110a). La pièce de fixation (106) est dans ce cas directement en contact avec le côté supérieur de la partie plane (103) du rotor porte-outils (102). Sans sortir du cadre de la présente invention, il est aussi envisageable, de remplacer les trous (104) par des taraudages (non représentés) dans lesquels les vis (107) sont susceptibles de s'engager. Ceci revient à supprimer la pièce de fixation (106). La figure 6 se rapporte également à l'utilisation d'une part d'un outil (110) présentant deux dégagements (110c) latéraux (figure 3 par exemple), et d'autre part d'organes de fixation comprenant une bride additionnelle (108) et le rotor porte-outils (102). La bride additionnelle (108) vient donc en appui contre la face inférieure de la partie de fixation (110a), et est retenue par les vis (107), lesquelles traversent les dégagements (110c) et les trous (104), avant de s'engager dans les taraudages (106a). La bride additionnelle (108) et la pièce de fixation (106) enserrent ainsi la partie plane (103) et la partie de fixation (10a).

Bien entendu, le taraudage (106a) ménagé dans la pièce de fixation (106) associé à la vis (107) permettent de solidariser les différents éléments entre eux sur le rotor porte-outils (102). Chaque tête (7a, 107a) des vis (7, 107) est bien entendu utilisée pour venir en appui contre le rotor porte-outils (2, 102) ou la bride additionnelle (108) et pour servir de moyen de retenu et de serrage.

Selon un autre mode de réalisation de la machine conforme à l'invention, non représenté aux figures, la bride additionnelle (108) peut présenter la forme complémentaire (6b ; 106b) coopérant avec la zone (A) de la partie de fixation (110a). Dans ce cas de figure, le rétrécissement (11) ou l'élargissement (111a) est localisé sur le côté inférieur, venant en contact avec la bride additionnelle (108).

Avec l'exemple de réalisation de l'outil (10) dans lequel les dégagements (10c) sont remplacés par des fentes ouvertes sur l'extrémité (12) libre de la partie de fixation, il est envisageable de remplacer la bride additionnelle (108) avec une tête (7a ; 107a) conique pour les vis (7 ; 107). Cette forme conique (non représentée aux figures) joue le rôle de la forme complémentaire (6b ; 106b) et coopère avec un rétrécissement (11) ménagé dans la partie de fixation (10a).

Le remplacement des outils (10 ; 110) peut ainsi être effectué de manière simple et rapide. En effet il suffit de desserrer partiellement les vis (7 ; 107) pour pouvoir dégager la forme complémentaire (6b ; 106b) de la zone (A).

Les outils (10 ; 110) peuvent donc être retirés et remplacés tout en ne démontant pas les organes de fixation montés sur le rotor porte-outils (2 ; 102).

Cet avantage remarquable peut être atteint avec diverses modifications ou transformations des pièces constitutives de la machine ou de l'outil (10 ; 110), sans pour autant sortir du cadre de la présente invention.

Le montage particulier de l'outil (10 ; 110) sur le rotor porte-outils (2 ; 102), conforme à l'invention présente également l'avantage de ne pas présenter de jeu mécanique après l'assemblage.

Les avantages obtenus par la présente invention, sont atteints également avec l'outil (10, 110) de travail, pour machine agricole, comportant une partie de fixation (10a, 110a) dont la forme présente une zone (A) d'épaisseur localement modifiée destinée à coopérer avec la forme complémentaire (6b, 106b) et correspondante d'organes de fixation de ladite machine. La forme complémentaire (6b, 106b) peut également être prévue directement sur le rotor porte-outils (2, 102), lequel vient en contact avec l'outil (10, 110). Les organes de fixation sont donc complétés par le rotor porte-outils (2 ; 102). La stabilité et la fiabilité obtenues avec une telle configuration de l'outil (10 ; 110) permet de valoriser considérablement la machine agricole s'y rapportant.

L'engagement entre la forme complémentaire (6b ; 106b) et la zone (A) réalise l'unique retenue radiale de la partie de fixation (10a ; 110a), de manière à autoriser le démontage complet de l'outil (10 ; 110) suite à un desserrage partiel de la (des) vis (7 ; 107).

## Revendications

1. Machine agricole comportant :
- un carter (1) supportant au moins un rotor porte-outils (2 ; 102) pourvu de trous (4 ; 104) et tournant autour d'un axe de rotation (x-x'),
- des outils (10 ; 110) présentant chacun une partie de fixation (10a ; 1 10a) et une partie de travail (10b ; 110b), ladite partie de fixation (10a ; 110a) s'étendant selon un axe radial (y - y') perpendiculaire à l'axe de rotation (x-x') et correspondant à une direction de montage sur le rotor porte-outil (2 ; 102),
- des organes de fixation comprenant d'une part une pièce de fixation (6 ; 106) pourvue d'au moins un taraudage (6a ; 106a) et d'autre part au moins une vis (7 ; 107) destinée à être engagée parallèlement à l'axe de rotation (x - x') dans l'un des trous (4 ; 104) et dans le taraudage (6a ; 106a) correspondant, de manière à solidariser la partie de fixation (10a ; 1 10a) sur le rotor porte-outils (2 ; 102),
***caractérisée en ce* que** la partie de fixation (10a ; 110a) présente une zone (A) d'épaisseur localement modifiée, associée à une forme correspondante complémentaire (6b ; 106b) de l'un des organes de fixation ou du rotor porte-outils (2 ; 102), ladite forme complémentaire (6b ; 106 b) venant s'engager dans ou sur la zone (A) lors du serrage de la/des vis (7 ; 107), ledit engagement réalisant l'unique retenue radiale de la partie de fixation (10a ; 110a) de manière à autoriser un démontage complet de l'outil suivant la direction radiale (y-y') avec un desserrage partiel de la/des vis (7 ; 107).

2. Machine agricole selon la revendication 1, ***caractérisée en ce* que** la zone (A) d'épaisseur localement modifiée se présente sous forme de rétrécissement (11).

3. Machine agricole selon la revendication 1, ***caractérisée en ce* que** la zone (A) se présente sous forme d'élargissement (111a) du type expansion de matière.

4. Machine agricole selon la revendication 2 ou 3 ***caractérisée en ce* que** la zone (A) présente une forme en "V" d'épaisseur localement modifiée.

5. Machine agricole selon l'une quelconque des revendications 1 à 4, ***caractérisée en ce* que** la zone (A) est centrée avec la forme complémentaire (6b ; 106 b) de la pièce de fixation (6 ; 106) ou du rotor porte-outils (2 ; 102) et avec la/les vis (7 ; 107).

6. Machine agricole selon l'une quelconque des revendications 1 à 5, ***caractérisée en ce* que** la partie de fixation (10a ; 110a) et la partie de travail (10b ; 110b) de chaque outil (10 ; 110) réalisent une forme sensiblement coudée.

7. Machine agricole selon la revendication 6, ***caractérisée en ce* que** la zone (A) s'étend sensiblement orthogonalement à l'axe radial (y-y').

8. Machine agricole selon l'une quelconque des revendications 1 à 7, ***caractérisée en ce* que** le rotor porte-outils (2 ; 102) vient au moins partiellement en surplomb de la partie de fixation (110a).

9. Machine agricole selon l'une quelconque des revendications 1 à 8 ***caractérisée en ce* que** la partie de fixation (10a) vient au moins partiellement en surplomb du rotor porte-outil (2).

10. Machine agricole selon l'une quelconque des revendications 1 à 9, ***caractérisée en ce* que** les organes de fixation comprennent une bride additionnelle (108) destinée à enserrer la partie de fixation (110a) entre ladite bride (108) et le rotor porte-outils (2).

11. Machine agricole selon la revendication 10, ***caractérisée en ce* que** la bride additionnelle (108) présente la forme complémentaire (106b) coopérant avec la zone (A) de la partie de fixation (110a).

12. Machine agricole selon l'une quelconque des revendications 1 à 11, ***caractérisée en ce* que** chaque outil (10a ; 110a) est fixé sur un rotor porte-outils (2 ; 102) correspondant à l'aide de deux vis (7 ; 107).

13. Machine agricole selon la revendication 12, ***caractérisée en ce* que** les deux vis (7 ; 107) s'étendent de part et d'autre de la partie de fixation (10a ; 110a) de l'outil (10 ; 110), dans un plan d'extension sensiblement perpendiculaire au plan d'extension de ladite partie de fixation (10a ; 110a), en traversant des dégagements (10c ; 110c) ménagés dans la partie de fixation (10a; 110a).

14. Machine agricole selon l'une quelconque des revendications 1 à 12, ***caractérisée en ce* que** chaque partie de fixation (10a ; 110a) est pourvue de fentes ouvertes à son extrémité libre, du type trous oblongs, chaque fente étant traversée par une vis (7 ; 107).

15. Machine agricole selon l'une quelconque des revendications 1 à 14, ***caractérisée en ce* qu'**elle constitue une herse rotative.

16. Outil (10 ; 110) de travail pour machine agricole comportant une partie de fixation (10a ; 110a) et une partie active (10b ; 110b) de travail, ***caractérisé en ce* que** la partie de fixation (10a ; 110a) présente une zone (A) d'épaisseur localement modifiée, destinée à coopérer avec une forme complémentaire (6b ; 106b) prévue sur l'un au moins des organes de fixation de l'outil (10 ; 110) ou sur un rotor porte-outils (2 ; 102) de ladite machine, ladite forme complémentaire (6b ; 106b) venant s'engager dans ou sur la zone (A) lors du serrage d'au moins une vis (7 ; 107), ledit engagement réalisant l'unique retenue radiale de ladite partie de fixation (10a ; 110a) de manière à autoriser un démontage complet dudit outil (10 ; 110) suivant la direction radiale (y-y') avec un desserrage partiel de la/des vis (7 ; 107).

## Patentansprüche

1. Landmaschine, die
- ein Gehäuse (1), das mindestens einen Werkzeuge tragenden Rotor (2; 102) stützt, welcher mit Löchern (4; 104) versehen ist und sich um eine Drehachse (x-x') dreht,
- Werkzeuge (10; 110), die jeweils einen Befestigungsteil (10a; 110a) und einen Arbeitsteil (10b; 110b) aufweisen, wobei sich der Befestigungsteil (10a; 110a) entlang einer senkrecht zur Drehachse (x-x') verlaufenden radialen Achse (y-y') erstreckt, die einer Richtung der Montage an dem Werkzeuge tragenden Rotor (2; 102) entspricht,
- Befestigungselemente, mit einerseits einem Befestigungsstück (6, 106), das mit mindestens einem Innengewinde (6a, 106a) versehen ist, und andererseits mindestens einer Schraube (7; 107), die parallel zur Drehachse (x-x') in einem der Löcher (4; 104) und in dem entsprechenden Innengewinde (6a; 106a) in Eingriff gebracht werden soll, um den Befestigungsteil (10a; 110a) an dem Werkzeuge tragenden Rotor (2; 102) zu befestigen,
umfasst, ***dadurch gekennzeichnet,* dass** der Befestigungsteil (10a; 110a) einen Bereich (A) mit lokal modifizierter Dicke aufweist, der einer entsprechenden komplementären Form (6b; 106b) eines der Befestigungselementen oder des Werkzeuge tragenden Rotors (2; 102) zugeordnet ist, wobei die komplementäre Form (6b; 106b) beim Festziehen der Schraube(n) (7, 107) in bzw. an den Bereich (A) eingreifen soll, wobei der Eingriff den einzigen radialen Halt des Befestigungsteils (10a; 110a) gewährleistet, so dass mittels einem teilweisen Lösen der Schraube(n) (7; 107) eine vollständige Demontage des Werkzeugs in der radialen Richtung (y-y') gestattet wird.

2. Landmaschine nach Anspruch 1, ***dadurch gekennzeichnet,* dass** der Bereich (A) mit lokal modifizierter Dicke in Form einer Verengung (11) vorliegt.

3. Landmaschine nach Anspruch 1, ***dadurch gekennzeichnet,* dass** der Bereich (A) als Erweiterung (111a) in Form einer Materialausdehnung vorliegt.

4. Landmaschine nach Anspruch 2 oder 3, ***dadurch gekennzeichnet,* dass** der Bereich (A) eine "V"-Form mit lokal modifizierter Dicke aufweist.

5. Landmaschine nach irgend einem der Ansprüche 1 bis 4, ***dadurch gekennzeichnet,* dass** der Bereich (A) mit der komplementären Form (6b; 106b) des Befestigungsstücks (6; 106) oder des Werkzeuge tragenden Rotors (2; 102) und mit der/den Schraube(n) (7; 107) zentriert wird.

6. Landmaschine nach irgend einem der Ansprüche 1 bis 5, ***dadurch gekennzeichnet,* dass** der Befestigungsteil (10a; 110a) und der Arbeitsteil (10b; 110b) jedes Werkzeugs (10; 110) eine im Wesentlichen gekrümmte Form aufweisen.

7. Landmaschine nach Anspruch 6, ***dadurch gekennzeichnet,* dass** sich der Bereich (A) im Wesentlichen orthogonal zur radialen Achse (y-y') erstreckt.

8. Landmaschine nach irgend einem der Ansprüche 1 bis 7, ***dadurch gekennzeichnet,* dass** der Werkzeuge tragende Rotor (2; 102) den Befestigungsteil (110a) zumindest teilweise überragt.

9. Landmaschine nach irgend einem der Ansprüche 1 bis 8, ***dadurch gekennzeichnet,* dass** der Befestigungsteil (10a) den Werkzeuge tragenden Rotor (2) zumindest teilweise überragt.

10. Landmaschine nach irgend einem der Ansprüche 1 bis 9, ***dadurch gekennzeichnet,* dass** die Befestigungselemente einen zusätzlichen Flansch (108) umfassen, der den Befestigungsteil (110a) zwischen dem Flansch (108) und dem Werkzeuge tragenden Rotor (2) einspannen soll.

11. Landmaschine nach Anspruch 10, ***dadurch gekennzeichnet,* dass** der zusätzliche Flansch (108) die komplementäre Form (106b) aufweist, die mit dem Bereich (A) des Befestigungsteils (110a) zusammenwirkt.

12. Landmaschine nach irgend einem der Ansprüche 1 bis 11, ***dadurch gekennzeichnet,* dass** jedes Werkzeug (10a; 110a) mittels zweier Schrauben (7; 107) an einem entsprechenden Werkzeuge tragenden Rotor (2; 102) befestigt ist.

13. Landmaschine nach Anspruch 12, ***dadurch gekennzeichnet,* dass** sich die beiden Schrauben (7; 107) auf beiden Seiten des Befestigungsteils (10a; 110a) des Werkzeugs (10; 110) in einer im Wesentlichen senkrecht zur Erstreckungsebene des Befestigungsteils (10a; 110a) verlaufenden Erstreckungsebene erstrecken, wobei sie im Befestigungsteil (10a; 110a) ausgebildete Aussparungen (10c; 110c) durchqueren.

14. Landmaschine nach irgend einem der Ansprüche 1 bis 12, ***dadurch gekennzeichnet,* dass** jeder Befestigungsteil (10a; 110a) an seinem freien Ende mit offenen Schlitzen in Form von Langlöchern versehen ist, wobei jeder Schlitz von einer Schraube (7; 107) durchquert wird.

15. Landmaschine nach irgend einem der Ansprüche 1 bis 14, ***dadurch gekennzeichnet,* dass** sie eine Kreiselegge bildet.

16. Arbeitswerkzeug (10; 110) für eine Landmaschine mit einem Befestigungsteil (10a; 110a) und einem aktiven Arbeitsteil (10b; 110b), ***dadurch gekennzeichnet,* dass** der Befestigungsteil (10a; 110a) einen Bereich (A) mit lokal modifizierter Dicke aufweist, der mit einer komplementären Form (6b; 106b), die an mindestens einem der Befestigungselementen des Werkzeugs (10; 110) oder an einem Werkzeuge tragenden Rotor (2; 102) der Maschine vorgesehen ist, zusammenwirken soll, wobei die komplementäre Form (6b; 106b) beim Festziehen mindestens einer Schraube (7, 107) in bzw. an den Bereich (A) eingreifen soll, wobei der Eingriff den einzigen radialen Halt des Befestigungsteils (10a; 110a) gewährleistet, so dass mittels einem teilweisen Lösen der Schraube(n) (7; 107) eine vollständige Demontage des Werkzeugs (10; 110) in der radialen Richtung (y-y') gestattet wird.

## Claims

1. Agricultural machine comprising:
- a gearbox (1) supporting at least one tool carrying rotor (2; 102) provided with holes (4; 104) and rotating around a rotation axis (x-x'),
- tools (10; 110) each presenting a connecting part (10a; 110a) and a working part (10b; 110b), the said connecting part (10a; 110a) extending along a radial axis (y-y') perpendicular to the rotation axis (x-x') and corresponding to a direction of assembly on the tool carrying rotor (2; 102),
- connecting elements comprising on the one hand a connecting piece (6; 106) provided with at least one tapping (6a; 106a) and on the other hand at least one screw (7; 107) intended to be engaged parallel to the rotation axis (x-x') in one of the holes (4; 104) and in the corresponding tapping (6a; 106a) in order to secure the connecting part (10a; 110a) onto the tool carrying rotor (2; 102),
***characterized in* that** the connecting part (10a; 110a) presents an area (A) of locally modified thickness, associated with a corresponding complementary shape (6b; 106b) of one of the connecting elements or of the tool carrying rotor (2; 102), the said complementary shape (6b; 106b) being engaged in or on the area (A) when the screw or screws (7; 107) is or are tightened, the said engagement achieving the single radial retention of the connecting part (10a; 110a) so as to enable a complete removal of the tool in the radial direction (y-y') with a partial loosening of the screw or screws (7; 107).

2. Agricultural machine according to Claim 1, ***characterized in* that** the area (A) of locally modified thickness is in the form of a narrowing (11).

3. Agricultural machine according to Claim 1, ***characterized in* that** the area (A) is in the form of a widening (111a) of the material expansion type.

4. Agricultural machine according to Claim 2 or 3, ***characterized in* that** the area (A) has a "V" shape of locally modified thickness.

5. Agricultural machine according to any one of Claims 1 to 4, ***characterized in* that** the area (A) is centred on the complementary shape (6b; 106b) of the connecting piece (6; 106) or of the tool carrying rotor (2; 102) and on the screw or screws (7; 107).

6. Agricultural machine according to any one of Claims 1 to 5, ***characterized in* that** the connecting part (10a; 110a) and the working part (10b; 110b) of each tool (10; 110) produce a substantially elbow shape.

7. Agricultural machine according to Claim 6, ***characterized in* that** the area (A) extends substantially orthogonally to the radial axis (y-y').

8. Agricultural machine according to any one of Claims 1 to 7, ***characterized in* that** the tool carrying rotor (2; 102) at least partially overhangs the connecting part (110a).

9. Agricultural machine according to any one of Claims 1 to 8, ***characterized in* that** the connecting part (10a) at least partially overhangs the tool carrying rotor (2).

10. Agricultural machine according to any one of Claims 1 to 9, ***characterized in* that** the connecting elements comprise an additional flange (108) intended to tighten the connecting part (110a) between the said flange (108) and the tool carrying rotor (2).

11. Agricultural machine according to Claim 10, ***characterized in* that** the additional flange (108) has the complementary shape (106b) cooperating with the area (A) of the connecting part (110a).

12. Agricultural machine according to any one of Claims 1 to 11, ***characterized in* that** each tool (10a; 110a) is attached to a corresponding tool carrying rotor (2; 102) with the aid of two screws (7; 107).

13. Agricultural machine according to Claim 12, ***characterized in* that** the two screws (7; 107) extend on either side of the connecting part (10a; 110a) of the tool (10; 110) in an extension plane substantially perpendicular to the extension plane of the said connecting part (10a; 110a) by passing through indentations (10c; 110c) made in the connecting part (10a; 110a).

14. Agricultural machine according to any one of Claims 1 to 12, ***characterized in* that** each connecting part (10a; 110a) is provided with open slots at its free end, of the oblong hole type, each slot being crossed through by a screw (7; 107).

15. Agricultural machine according to any one of Claims 1 to 14, ***characterized in* that** it constitutes a rotary harrow.

16. Working tool (10; 110) for agricultural machine comprising a connecting part (10a; 110a) and an active working part (10b; 110b), ***characterized in* that** the connecting part (10a; 110a) presents an area (A) of locally modified thickness, intended to cooperate with a complementary shape (6b; 106b) provided on at least one of the connecting elements for attaching the tool (10; 110) or on a tool carrying rotor (2; 102) of the said machine, the said complementary shape (6b; 106b) being engaged in or on the area (A) when at least one screw (7; 107) is tightened, the said engagement achieving the single radial retention of the said connecting part (10a; 110a) so as to enable a complete removal of the said tool (10; 110) in the radial direction (y-y') with a partial loosening of the screw or screws (7; 107).
